# EUROPEAN PATENT SPECIFICATION

(11) **EP 3 839 907 B1**
(45) Date of publication and mention of the grant of the patent: **06.11.2024**
(21) Application number: 20196902.9
(22) Date of filing: 18.09.2020
(51) Int. Cl.: G07G 1/00, G06Q 30/06, G07G 1/14

(54) **SHOPPER MANAGEMENT DEVICE, INFORMATION PROCESSING PROGRAM, SHOPPER MANAGEMENT METHOD, AND SHOPPER MANAGEMENT SYSTEM**
KÄUFERVERWALTUNGSVORRICHTUNG, INFORMATIONSVERARBEITUNGSPROGRAMM, KÄUFERVERWALTUNGSVERFAHREN UND KÄUFERVERWALTUNGSSYSTEM
DISPOSITIF DE GESTION D'ACHETEUR, PROGRAMME DE TRAITEMENT D'INFORMATIONS, PROCÉDÉ DE GESTION D'ACHETEUR ET SYSTÈME DE GESTION D'ACHETEUR

(30) Priority: 17.12.2019 JP 2019227204
(43) Date of publication of application: 23.06.2021
(73) Proprietor: Toshiba Tec Kabushiki Kaisha, Shinagawa-ku Tokyo 141-8562 (JP)
(72) Inventor: MIYAGI, Daisuke, Shinagawa-ku, Tokyo 141-8562 (JP)
(74) Representative: Bandpay & Greuter

(56) References cited:
- EP-A1- 3 239 943
- JP-A- 2014 149 686
- US-A1- 2018 373 928

## Description

### FIELD

Embodiments described herein relate generally to a shopper management device, an information processing program, a shopper management method, and a shopper management system.

### BACKGROUND

A technique for monitoring actions of shoppers in a store with a large number of sensors to register commodities that the shoppers are about to purchase is already realized. However, in such a technique, the large number of sensors need to be appropriately disposed to be able to always monitor the actions of the shoppers. Detection results obtained by the sensors need to be appropriately processed. Therefore, there are many difficulties in actual system construction.

If a shopper is temporarily lost track of because of some failure, even if the monitoring of the same shopper can be resumed, it may be sometimes difficult for a system to determine whether a monitoring target after the resumption is the same shopper as a monitoring target before the loss. In such a case, one shopper is sometimes monitored as different shoppers before and after the loss. Under such circumstances, it is desired to appropriately monitor the shopper even if the shopper is lost track of in processing for monitoring actions of the shopper.

Related art is described in, for example, US2018373928, JP2014149686 and JP5356615

To solve the aforementioned problems, there is provided a shopper management system according to appended claims.

In another exemplary embodiment, there is also provided a shopper management method according to claims.

### DESCRIPTION OF THE DRAWINGS

FIG. 1 is a schematic block diagram illustrating a configuration of a store management system according to an embodiment;
FIG. 2 is a block diagram illustrating a circuit configuration of a sales management device illustrated in FIG. 1;
FIG. 3 is a schematic diagram illustrating the structure of a data record included in a member database illustrated in FIG. 2;
FIG. 4 is a schematic diagram illustrating the structure of a data record included in a shopper database illustrated in FIG. 2;
FIG. 5 is a schematic diagram illustrating the structure of a data record included in a purchased commodity database illustrated in FIG. 2;
FIG. 6 is a block diagram illustrating a circuit configuration of a check-in device illustrated in FIG. 1;
FIG. 7 is a block diagram illustrating a circuit configuration of an action monitoring device illustrated in FIG. 1;
FIG. 8 is a block diagram illustrating a circuit configuration of a monitoring person terminal illustrated in FIG. 1;
FIG. 9 is a flowchart of action monitoring processing performed by a processor illustrated in FIG. 7;
FIG. 10 is a flowchart of sales management processing performed by a processor illustrated in FIG. 2;
FIG. 11 is a flowchart of check-in processing performed by a processor illustrated in FIG. 6;
FIG. 12 is a flowchart of shopper management processing performed by the processor illustrated in FIG. 2;
FIG. 13 is a diagram illustrating an example of a list screen;
FIG. 14 is a diagram illustrating an example of an unknown record selection screen;
FIG. 15 is a diagram illustrating an example of a list screen; and
FIG. 16 is a diagram illustrating an example of a known record selection screen.

### DETAILED DESCRIPTION

An object of embodiments disclosed herein is to provide a shopper management device, an information processing program, a shopper management method, and a shopper management system that can appropriately manage a shopper even if the shopper is lost track of during processing for monitoring actions of the shopper.

In general, according to one embodiment, a shopper management device includes a determining unit, an input unit, and a correlating unit. The determining unit determines that identification data for identifying a tracked person is not correlated with specifying data for specifying a shopper. The input unit inputs the specifying data according to operation by an operator. The correlating unit correlates the specifying data input by the input unit with the identification data determined by the determining unit as not being correlated with the specifying data.

An example of an embodiment is explained below with reference to the drawings.

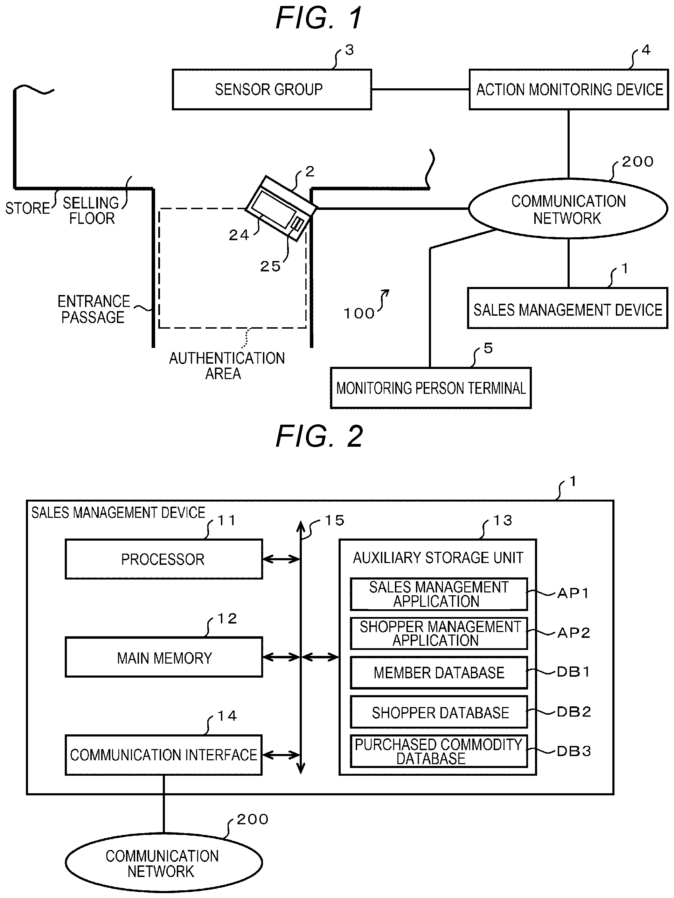

FIG. 1 is a schematic block diagram illustrating a configuration of a store management system 100 configured by applying a shopper management device according to this embodiment. The store management system 100 performs information processing for commodity sales in a store that sells commodities displayed in commodity shelves, display cases, display stands, and the like in a selling floor. The store management system 100 is configured by communicably connecting a sales management device 1, a check-in device 2, a sensor group 3, an action monitoring device 4, and a monitoring person terminal 5 via a communication network 200. The store management system 100 manages shoppers in the store for commodity sales and has a function of a shopper management system.

The communication network 200 may be or include the Internet, a virtual private network (VPN), a local area network (LAN), a public communication network, a mobile communication network, and/or the like alone or used in combination as appropriate.

The sales management device 1 performs, based on a monitoring result by the action monitoring device 4, sales management processing, which is information processing relating to purchase of commodities by a shopper in the store. The sales management processing includes registration processing and accounting processing. The registration processing is processing for registering, as a purchased commodity, a commodity that the shopper is about to purchase. Specifically, the sales management device 1 stores, for example, in a built-in or external memory, commodity information of commodities registered for each of shoppers tracked by the action monitoring device 4. In this way, the sales management device 1 has a function of a storing unit. The accounting processing is processing for calculating a price of the purchased commodity and causing the shopper to settle the price. The sales management device 1 performs shopper management processing, which is information processing for management of the shopper concerning the monitoring result by the action monitoring device 4. Consequently, the sales management device 1 also has a function of a shopper management device. The shopper management processing is explained below.

The check-in device 2 receives a check-in procedure for entering the store. The sensor group 3 includes a plurality of sensors disposed in the store. The plurality of sensors detect actions of shoppers and display states of commodities. The sensors are, for example, cameras, optical sensors, infrared sensors, temperature sensors, and/or weight sensors. The action monitoring device 4 performs monitoring, targeting people present in the store, and monitors actions of the people and display states of commodities in the store based on detection results in the sensor group 3. The monitoring person terminal 5 is used by a store clerk or the like, who takes on a role of a monitoring person, in order to monitor a state of provision of a service by the store management system 100.

FIG. 2 is a block diagram illustrating a circuit configuration of the sales management device 1. The sales management device 1 includes a processor 11, a main memory 12, an auxiliary storage unit 13, a communication interface 14, and a transmission line 15. The processor 11, the main memory 12, the auxiliary storage unit 13, and the communication interface 14 are connected by the transmission line 15. The processor 11, the main memory 12, and the auxiliary storage unit 13 are connected by the transmission line 15 to configure a computer that performs information processing for controlling the sales management device 1.

The processor 11 is equivalent to a central part of the computer. The processor 11 performs information processing for realizing various functions of the sales management device 1 according to an information processing program.

The main memory 12 is equivalent to a main storage part of the computer. The main memory 12 includes a nonvolatile memory region and a volatile memory region. The main memory 12 stores the information processing program in the nonvolatile memory region. The main memory 12 sometimes stores, in the nonvolatile or volatile memory region, data necessary for the processor 11 in executing information processing. The main memory 12 uses the volatile memory region as a work area where data is rewritten as appropriate by the processor 11.

The auxiliary storage unit 13 is equivalent to an auxiliary storage part of the computer. As the auxiliary storage unit 13, for example, a well-known storage device such as an electric erasable programmable read-only memory (EEPROM), a hard disc drive (HDD), or a solid state drive (SSD) is used alone or a plurality of storage devices are used in combination. The auxiliary storage unit 13 saves data used by the processor 11 in performing various kinds of processing and data created by the processing in the processor 11. The auxiliary storage unit 13 stores information processing programs. One of the information processing programs stored by the auxiliary storage unit 13 is an application program for sales management processing (hereinafter referred to as sales management application) AP1. Another one of the information processing programs stored by the auxiliary storage unit 13 is an application program for shopper management processing (hereinafter referred to as shopper management application) AP2. The auxiliary storage unit 13 stores a member database DB1, a shopper database DB2, and a purchased commodity database DB3.

The member database DB 1 is a database for managing shoppers who finish member registration for doing shopping in the store managed by the store management system 100.

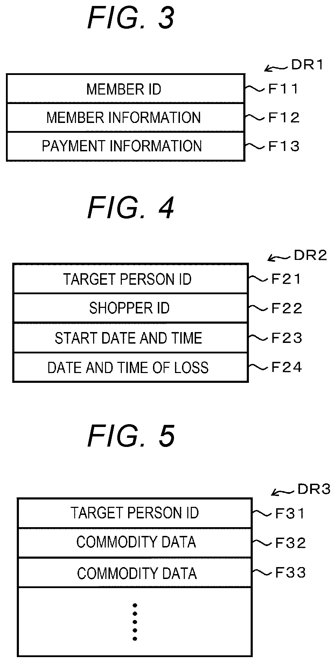

FIG. 3 is a diagram schematically illustrating the structure of a data record DR1 included in the member database DB1. The member database DB1 is a set of data records DR1 having the structure illustrated in FIG. 3. The data records DR1 included in the member database DB1 are respectively correlated with shoppers. One data record DR1 includes fields F11, F12, and F13. In the field F11, a member identifier (ID) given during the member registration in order to distinguish a shopper correlated with the data record DR1 from other shoppers is set. In the field F12, member information representing attributes and the like of the correlated shopper is set. The member information may include any information. The information included in the member information is, for example, a name, age, sex, an address, and/or a telephone number. In the field F13, payment information relating to payment of a price by the correlated shopper is set. The payment information is, for example, a credit card number.

The shopper database DB2 is a database for managing shoppers present in the store. FIG. 4 is a diagram schematically illustrating the structure of a data record DR2 included in the shopper database DB2. The shopper database DB2 is a set of data records DR2 having the structure illustrated in FIG. 4. The data records DR2 included in the shopper database DB2 are respectively correlated with target persons of monitoring by the action monitoring device 4. One data record DR2 includes fields F21, F22, F23, and F24. In the field F21, a target person ID for identifying a target person correlated with the data record DR2 in the action monitoring device 4 is set. The target person ID is an example of identification data for identifying a target person whose actions are monitored. In the field F22, a shopper ID for identifying the correlated target person in the sales management device 1 is set. The shopper ID is an example of specifying data for specifying a shopper set as a target person. If the shopper ID is unknown, the field F22 is left blank or data predetermined to be distinguishable from the shopper ID is set in the field F22. In this embodiment, it is assumed that predetermined invalid data is set in the field F22. In the field F23, data representing date and time when the action monitoring device 4 starts tracking of the correlated target person is set. In the field F24, data representing date and time when the tracking of the correlated target person by the action monitoring device 4 is lost is set. If the tracking of the correlated target person by the action monitoring device 4 is continued, the field F22 is left blank or data predetermined to be distinguishable from regular date and time is set. In this embodiment, it is assumed that predetermined invalid data is set.

The purchased commodity database DB3 is a database for managing purchased commodities set as targets of transactions with shoppers present in the store. FIG. 5 is a diagram schematically illustrating the structure of a data record DR3 included in the purchased commodity database DB3. The purchased commodity database DB3 is a set of data records DR3 having the structure illustrated in FIG. 5. The data records DR3 included in the purchased commodity database DB3 are respectively correlated with target persons set as targets of monitoring by the action monitoring device 4. One data record DR3 includes at least a field F31. The data record DR3 could include fields F32, F33, and the like. In the field F31, a target person ID concerning a target person correlated with the data record DR3 is set. If a purchased commodity is already registered concerning the correlated target person, the field F32 and subsequent fields are included in the data record DR3. In the field F32 and the subsequent fields, commodity data concerning a commodity already registered as the purchased commodity concerning the correlated target person is set. The commodity data includes a commodity code, the number of items, and a cancellation flag. The commodity data may include other information such as a unit price and a commodity name. The commodity code is an identification code decided in order to identify a commodity for each stock keeping unit (SKU). For example, a Japanese article number (JAN) code is used as the commodity code. The cancellation flag is flag data for specifying a commodity once registered as a purchased commodity but cancelled thereafter. In this way, a list of purchased commodities concerning the correlated target person is represented by the field F32 and the subsequent fields.

The communication interface 14 is an interface for data communication via the communication network 200. As the communication interface 14, for example, a well-known communication device for performing data communication via a LAN can be used. The transmission line 15 includes an address bus, a data bus, and a control signal line and transmits data and control signals exchanged among the connected units.

Hardware of the sales management device 1 may include, for example, a general-purpose network server or other computer devices. In general, transfer of the sales management device 1 is performed in a state in which the sales management application AP1 and the shopper management application AP2 are stored in the auxiliary storage unit 13 and the member database DB 1, the shopper database DB2, and the purchased commodity database DB3 are not stored in the auxiliary storage unit 13. However, the hardware in a state in which the sales management application AP1 and the shopper management application AP2 are not stored in the auxiliary storage unit 13 or a state in which a sales management application of the same type and another version is stored in the auxiliary storage unit 13 and the sales management application AP1 and the shopper management application AP2 may be individually transferred. The sales management application AP1 and the shopper management application AP2 are written in the auxiliary storage unit 13 according to operation by any operator, whereby the sales management device 1 may be configured. Transfer of the sales management application AP1 and the shopper management application AP2 can be performed by recording the sales management application AP 1 and the shopper management application AP2 in a removable recording medium such as a magnetic disk, a magneto-optical disk, an optical disk, or a semiconductor memory or can be performed by communication via a network.

The processor 11 executes information processing for member registration, whereby the member database DB1 is written in the auxiliary storage unit 13. Alternatively, as the member database DB1, for example, during a start of the sales management device 1, a member database managed by a not-illustrated member management server is acquired via the communication network 200 and written in the auxiliary storage unit 13. The member database DB 1 may not be stored in the auxiliary storage unit 13. The processor 11 may refer to the member database managed by the member management server.

The processor 11 executes the information processing based on the sales management application AP1 and the shopper management application AP2, whereby the shopper database DB2 and the purchased commodity database DB3 are formed in the auxiliary storage unit 13. At least a part of the sales management application AP1, the shopper management application AP2, the member database DB1, the shopper database DB2, and the purchased commodity database DB3 may be stored in the main memory 12.

As illustrated in FIG. 1, the check-in device 2 is disposed in an entrance passage, where a shopper entering a selling floor of the store passes, to be operated by the shopper. However, a setting place and a setting form of the check-in device 2 may be any setting place and any setting form if the check-in device 2 can be operated by a shopper about to enter the selling floor.

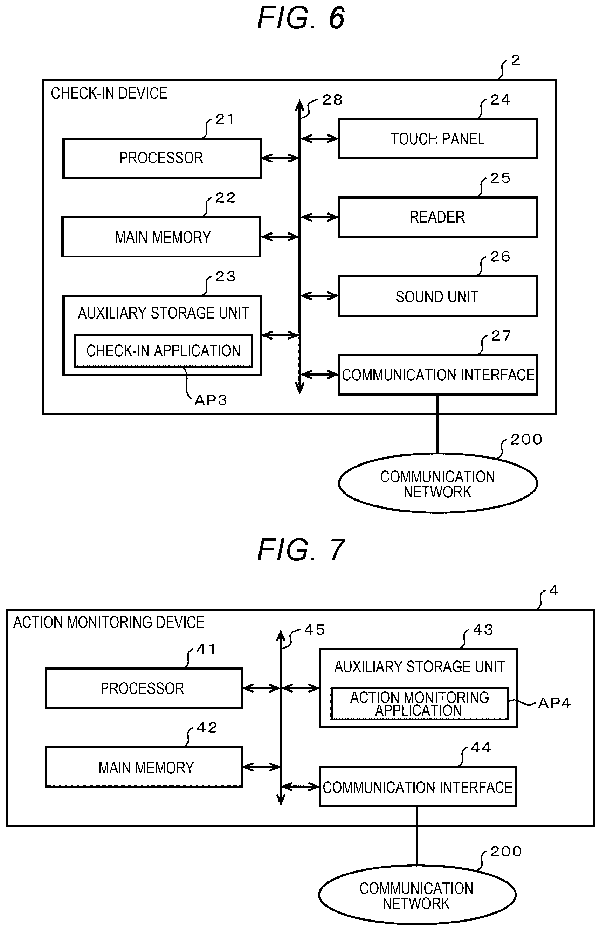

FIG. 6 is a block diagram illustrating a circuit configuration of the check-in device 2. The check-in device 2 includes a processor 21, a main memory 22, an auxiliary storage unit 23, a touch panel 24, a reader 25, a sound unit 26 (one or more speakers), a communication interface 27, and a transmission line 28. The processor 21, the main memory 22, the auxiliary storage unit 23, the touch panel 24, the reader 25, the sound unit 26, and the communication interface 27 are connected by the transmission line 28. The processor 21, the main memory 22, and the auxiliary storage unit 23 are connected by the transmission line 28 to configure a computer that performs information processing for controlling the check-in device 2. Overviews of functions of the processor 21, the main memory 22, the auxiliary storage unit 23, the communication interface 27, and the transmission line 28 are equivalent to the overviews of the functions of the processor 11, the main memory 12, the auxiliary storage unit 13, the communication interface 14, and the transmission line 15. Therefore, explanation of the overviews of the functions is omitted. One of the information processing programs stored by the auxiliary storage unit 23 is an application program for realizing a function of the check-in device 2 (hereinafter referred to as check-in application) AP3.

The touch panel 24 displays a screen for presenting various kinds of information to an operator. That is, the touch panel 24 is an example of a display device. Data designated by touch operation by the operator is input to the touch panel 24. The operator of the check-in device 2 is a shopper in most cases. However, a store clerk is sometimes the operator. The reader 25 reads a member ID presented by a shopper. For example, a magnetic card reader is used as the reader 25. An optical barcode reader or a wireless reader using proximity wireless communication may be used as the reader 25. The sound unit 26 outputs various kinds of sound such as voice and melody.

Hardware of the check-in device 2 may be or include, for example, a general-purpose tablet computer or other general-purpose computer devices. In general, transfer of the check-in device 2 is performed in a state in which the check-in application AP3 is stored in the auxiliary storage unit 23. However, the hardware in a state in which the check-in application AP3 is not stored in the auxiliary storage unit 23 or a state in which a check-in application of the same type and another version is stored in the auxiliary storage unit 23 and the check-in application AP3 may be individually transferred. The check-in application AP3 is written in the auxiliary storage unit 23 according to operation by any operator, whereby the check-in device 2 may be configured. Transfer of the check-in application AP3 can be performed by recording the check-in application AP3 in a removable recording medium such as a magnetic disk, a magneto-optical disk, an optical disk, or a semiconductor memory or can be performed by communication via a network.

FIG. 7 is a block diagram illustrating a circuit configuration of the action monitoring device 4. The action monitoring device 4 includes a processor 41, a main memory 42, an auxiliary storage unit 43, a communication interface 44, and a transmission line 45. The processor 41, the main memory 42, the auxiliary storage unit 43, and the communication interface 44 are connected by the transmission line 45. The processor 41, the main memory 42, and the auxiliary storage unit 43 are connected by the transmission line 45 to configure a computer that performs information processing for controlling the action monitoring device 4. Overviews of functions of the processor 41, the main memory 42, the auxiliary storage unit 43, the communication interface 44, and the transmission line 45 are equivalent to the overviews of the functions of the processor 11, the main memory 12, the auxiliary storage unit 13, the communication interface 14, and the transmission line 15. Therefore, explanation of the overviews of the functions is omitted. One of the information processing programs stored by the auxiliary storage unit 43 is an application program for realizing a function of the action monitoring device 4 (hereinafter referred to as action monitoring application) AP4.

Hardware of the action monitoring device 4 may be or include, for example, a general-purpose network server or other computer devices. In general, transfer of the action monitoring device 4 is performed in a state in which the action monitoring application AP4 is stored in the auxiliary storage unit 43. However, the hardware in a state in which the action monitoring application AP4 is not stored in the auxiliary storage unit 43 or a state in which an action monitoring application of the same type and another version is stored in the auxiliary storage unit 43 and the action monitoring application AP4 may be individually transferred. The action monitoring application AP4 is written in the auxiliary storage unit 43 according to operation by any operator, whereby the action monitoring device 4 may be configured. Transfer of the action monitoring application AP4 can be performed by recording the action monitoring application AP4 in a removable recording medium such as a magnetic disk, a magneto-optical disk, an optical disk, or a semiconductor memory or can be performed by communication via a network.

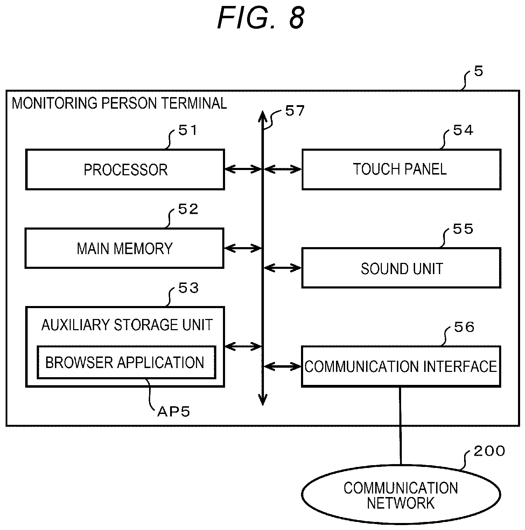

FIG. 8 is a block diagram illustrating a main part circuit configuration of the monitoring person terminal 5. The monitoring person terminal 5 includes a processor 51, a main memory 52, an auxiliary storage unit 53, a touch panel 54, a sound unit 55 (one or more speakers), a communication interface 56, and a transmission line 57. The processor 51, the main memory 52, the auxiliary storage unit 53, the touch panel 54, the sound unit 55, and the communication interface 56 are connected by the transmission line 57. The processor 51, the main memory 52, and the auxiliary storage unit 53 are connected by the transmission line 57 to configure a computer that performs information processing for controlling the monitoring person terminal 5. Overviews of functions of the processor 51, the main memory 52, the auxiliary storage unit 53, the communication interface 56, and the transmission line 57 are equivalent to the overviews of the functions of the processor 11, the main memory 12, the auxiliary storage unit 13, the communication interface 14, and the transmission line 15. Therefore, explanation of the overviews of the functions is omitted. One of information processing programs stored by the auxiliary storage unit 53 is an application program for realizing a function of a Web browser (hereinafter referred to as browser application) AP5.

The touch panel 54 displays a screen for presenting various kinds of information to the monitoring person. Data designated by touch operation by the monitoring person is input to the touch panel 54. The sound unit 55 outputs various kinds of sound such as voice and melody.

Hardware of the monitoring person device 5 may be or include, for example, a general-purpose computer device, a portable information terminal such as a smartphone or a tablet terminal, or the like can be used. In most cases, the device of this type is sold in the market in a state in which the browser application AP5 is stored in the auxiliary storage unit 53. However, the hardware of the monitoring person terminal 5 may be transferred in a state in which the browser application AP5 is not stored in the auxiliary storage unit 53. The browser application AP5 transferred separately from the hardware may be written in the auxiliary storage unit 23 according to operation by any operator. Transfer of the browser application AP5 can be performed by recording the browser application AP5 in a removable recording medium such as a magnetic disk, a magneto-optical disk, an optical disk, or a semiconductor memory or can be performed by communication via a network.

The operation of the store management system 100 explained above is explained in greater detail herein. Contents of various kinds of information processing explained below are examples. A change of the order of a part of the processing, omission of a part of the processing, addition of other processing, or the like is possible as appropriate.

A shopper shopping in the store managed by the store management system 100 finishes member registration in advance and acquires a member card in which a member ID is recorded. When moving to the selling floor passing through the entrance passage illustrated in FIG. 1, the shopper causes the reader 25 of the check-in device 2 to read the member ID recorded in the member card. The shopper enters the selling floor and takes out, from the selling floor, commodities that the shopper desires to purchase.

In the action monitoring device 4, the processor 41 executes action monitoring processing based on the action monitoring application AP4. In a situation in which a plurality of target persons are present in the store, the processor 41 executes the action monitoring processing explained below in parallel concerning the respective target persons. In the following explanation concerning the action monitoring processing, the action monitoring processing is explained concerning one target person. The relevant target person is simply referred to as "target person".

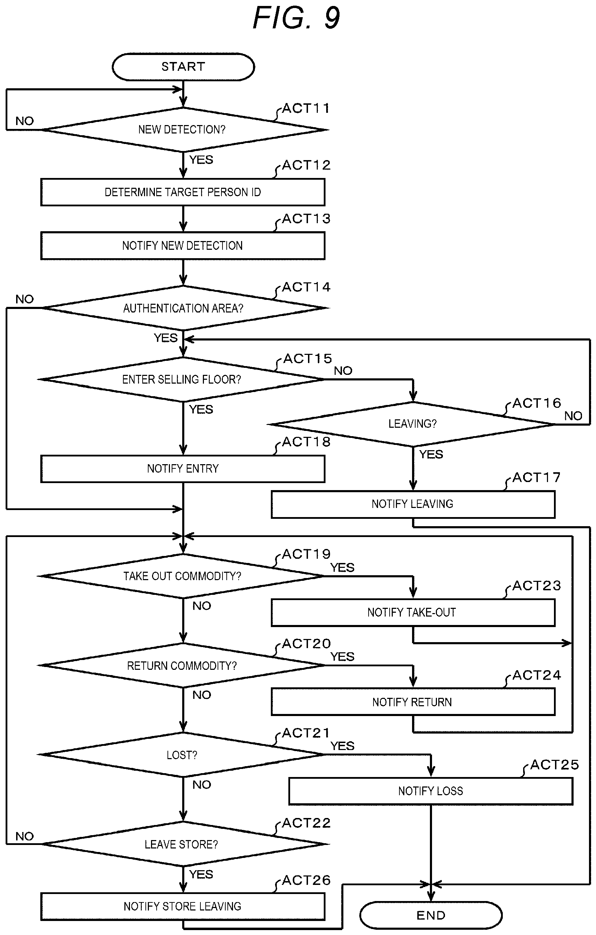

FIG. 9 is a flowchart of the action monitoring processing by the processor 41. In ACT 11, the processor 41 waits for a new target person to be detected. For example, the processor 41 monitors outputs of the sensor group 3. If detecting a target person different from a monitored target person, the processor 41 determines YES and proceeds to ACT 12. For example, if the shopper moving to the selling floor enters the entrance passage as explained above, the processor 41 detects the shopper as a new target person. For example, the processor 41 repeatedly records the position of the detected target person at a short period and monitors a moving track of the target person to track the target person. Accordingly, if a state in which the target person cannot be detected by the sensor group 3 continues for a fixed period, the processor 41 sometimes loses track of the target person. If detecting a monitored shopper again after temporarily losing track of the shopper, the processor 41 also detects the shopper as a new target person. In this way, the processor 41 executes information processing based on the action monitoring application AP4 in this way, whereby a computer including the processor 41 as a central part functions as a tracking unit.

In ACT 12, the processor 41 determines, according to predetermined rules, a target person ID for distinguishing the detected target person from other monitored target persons. The rules may be any rules if the rules are decided such that a new target person ID determined does not overlap target person IDs determined for other target persons already monitored. The rules are decided by, for example, a creator of the action monitoring application AP4.

In ACT 13, the processor 41 notifies the sales management device 1 that the new target person is detected. The processor 41 sends, for example, notification data including a notification code decided in advance as a notification code representing a notification of new detection and the target person ID determined in ACT 12 to the communication network 200 to transmit the notification data from the communication interface 44 to the sales management device 1. The notification data is transmitted to the sales management device 1 by the communication network 200. The processor 41 may include, in the notification data, data representing date and time when the target person is detected. Various notifications among devices explained below are notified by transmitting notification data including notification codes representing reasons for the notifications from a notification source device to a notification destination device via the communication network 200.

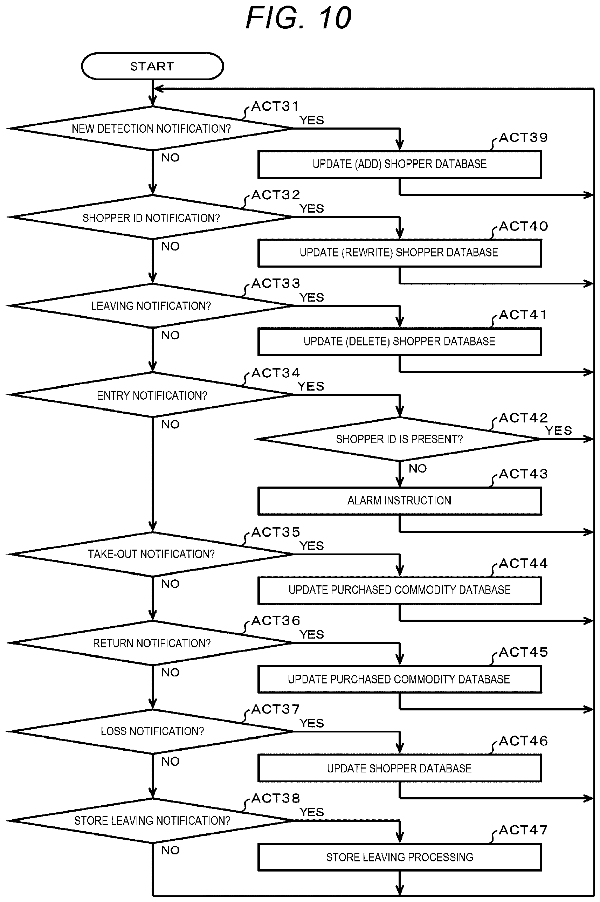

On the other hand, in the sales management device 1, the processor 11 executes sales management processing based on the sales management application AP1. FIG. 10 is a flowchart of the sales management processing by the processor 11.

In ACT 31, the processor 11 confirms whether new detection is notified. If failing in confirming the notification, the processor 11 determines NO and proceeds to ACT 32. In ACT 32, the processor 11 confirms whether a shopper ID is notified. If failing in confirming the notification, the processor 11 determines NO and proceeds to ACT 33. In ACT 33, the processor 11 confirms whether leaving is notified. If failing in confirming the notification, the processor 11 determines NO and proceeds to ACT 34.

In ACT 34, the processor 11 confirms whether entry is notified. If failing in confirming the notification, the processor 11 determines NO and proceeds to ACT 35. In ACT 35, the processor 11 confirms whether take-out is notified. If failing in confirming the notification, the processor 11 determines NO and proceeds to ACT 36. In ACT 36, the processor 11 confirms whether return is notified. If failing in confirming the notification, the processor 11 determines NO and proceeds to ACT 37.

In ACT 37, the processor 11 confirms whether loss is notified. If failing in confirming the notification, the processor 11 determines NO and proceeds to ACT 38. In ACT 38, the processor 11 confirms whether store leaving is notified. If failing in confirming the notification, the processor 11 determines NO and returns to ACT 31. In this way, in ACT 31 to ACT 38, the processor 11 waits for any one of new detection, a shopper ID, leaving, entry, take-out, return, loss, and store leaving to be notified.

The notification data sent from the action monitoring device 4 in order to notify that the new target person is detected is transmitted to the sales management device 1 by the communication network 20. In the sales management device 1, if the notification data is received by the communication interface 14, the processor 11 determines YES in ACT 31 and proceeds to ACT 39. In ACT 39, the processor 11 updates the shopper database DB2 to add a new data record DR2 correlated with the new target person detected. The processor 11 sets the target person ID included in the notification data in the field F21 of the data record DR2 to be added. The processor 11 sets invalid data in the field F22 of the data record DR2 to be added. The processor 11 sets data representing the present date and time in the field F23 of the data record DR2 to be added. If data representing detection date and time is included in the notification data, the processor 11 may set the data in the field F23. The processor 11 sets invalid data in the field F24 of the data record DR2 to be added. Thereafter, the processor 11 returns to the waiting state in ACT 31 to ACT 38.

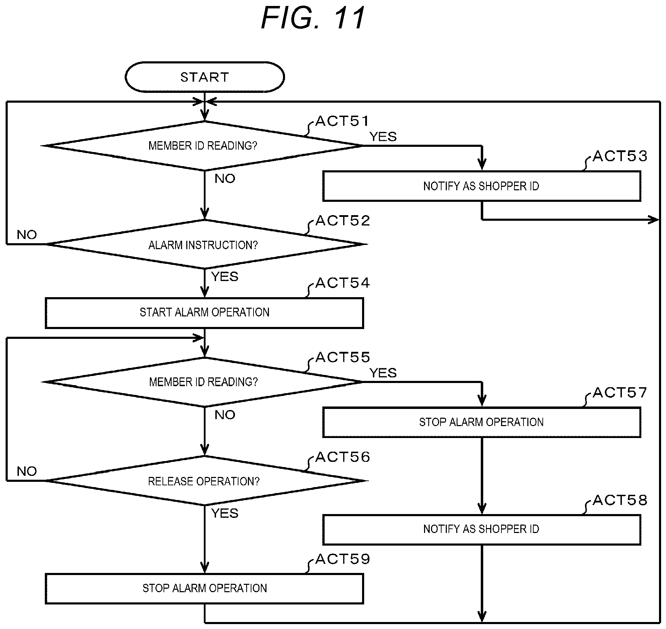

On the other hand, in the check-in device 2, the processor 21 executes check-in processing based on the check-in application AP3. FIG. 11 is a flowchart of the check-in processing by the processor 21.

In ACT 51, the processor 21 confirms whether the member ID is read by the reader 25. If failing in confirming that the member ID is read, the processor 21 determines NO and proceeds to ACT 52. In ACT 52, the processor 21 confirms whether an alarm instruction is performed from the sales management device 1. If failing in confirming that the alarm instruction is performed, the processor 21 determines NO and returns to ACT 51. In this way, in ACT 51 and ACT 52, the processor 21 waits for the member ID to be read or the alarm instruction to be performed.

If the shopper causes the reader 25 of the check-in device 2 to read the member ID recorded in the member card while moving to the selling floor passing through the entrance passage as explained above, the processor 21 determines YES in ACT 51 and proceeds to ACT 53. In ACT 53, the processor 21 transmits the member ID to the sales management device 1 as a shopper ID. The processor 21 includes, in notification data for the notification, for example, the member ID read by the reader 25. Thereafter, the processor 21 returns to the waiting state in ACT 51 and ACT 52. In this embodiment, it is assumed that the processor 21 permits only a member registration in advance to do shopping. However, the processor 21 may also permit a non-member to do shopping. In this case, the processor 21 receives a declaration of the non-member as, for example, predetermined operation on the touch panel 24 and temporarily allocates a shopper ID for the non-member distinguishable from the member ID of the shopper. The processor 21 may allocate a shopper ID different from the member ID of a shopper, who is the member, every time the shopper checks in.

In the sales management device 1, if the shopper ID is notified in this way, the processor 11 determines YES in ACT 32 in FIG. 10 and proceeds to ACT 40. In ACT 40, the processor 11 updates the shopper database DB2 in order to correlate the notified shopper ID with the target person ID. For example, the processor 11 rewrites the data record DR2, which is added to the shopper database DB2 as explained above and in which the invalid data is set in the field F22, to set the shopper ID included in the notification data in the field F22. Thereafter, the processor 11 returns to the waiting state in ACT 31 to ACT 38.

In the action monitoring device 4, after notifying the new detection in ACT 13 in FIG. 9, the processor 41 proceeds to ACT 14. In ACT 14, the processor 41 confirms whether a position where the new target person is detected is within an authentication area. If the position is within the authentication area, the processor 41 determines YES and proceeds to ACT 15. In ACT 15, the processor 41 confirms whether the target person enters the selling floor from the authentication area. If failing in confirming such an action, the processor 41 determines NO and proceeds to ACT 16. In ACT 16, the processor 41 confirms whether the target person turns back in the entrance passage without entering the selling floor and leaves the store. If failing in confirming such an action, the processor 41 determines NO and returns to ACT 15. In this way, in ACT 15 and ACT 16, the processor 41 waits for the target person to leave the authentication area or enter the selling floor.

The shopper sometimes cancels the shopping because of some reason and turns back in the entrance passage and leaves the store, for example, if the shopper leaves a member card at home. If confirming such an action of the target person, the processor 41 determines YES in ACT 16 and proceeds to ACT 17. In ACT 17, the processor 41 notifies the leaving to the sales management device 1. The processor 41 includes, in notification data for the notification, for example, the target person ID determined in ACT 12. Thereafter, the processor 41 ends the action monitoring processing.

In the sales management device 1, if the leaving is notified in this way, the processor 11 determines YES in ACT 33 in FIG. 10 and proceeds to ACT 41. In ACT 41, the processor 11 updates the shopper database DB2 in order to delete the data record DR2 correlated with the target person. That is, the processor 11 deletes, from the shopper database DB2, the data record DR2 in which the target person ID included in the notification data is set in the field F21. Thereafter, the processor 11 returns to the waiting state in ACT 31 to ACT 38.

In the action monitoring device 4, if confirming that the target person enters the selling floor from the authentication area, the processor 41 determines YES in ACT 15 in FIG. 9 and proceeds to ACT 18. In ACT 18, the processor 41 notifies the entry in the selling floor to the sale management device 1. The processor 41 includes, in notification data for the notification, for example, the target person ID determined in ACT 12.

In the sales management device 1, if the selling floor entry is notified in this way, the processor 11 determines YES in ACT 34 in FIG. 10 and proceeds to ACT 42. In ACT 42, the processor 11 confirms whether a shopper ID correlated with the target person ID included in the notification data is present. For example, the processor 11 finds out, from the shopper database DB2, the data record DR2 in which the target person ID included in the notification data is set in the field F21. If the relevant data record DR2 is found, the processor 11 confirms whether a valid shopper ID is set in the field F22 of the data record DR2. If invalid data is set in the relevant field F22, the processor 11 determines NO and proceeds to ACT 43.

In ACT 43, the processor 11 instructs the check-in device 2 to sound an alarm. For example, the processor 11 transmits a command representing the instruction of the alarm from the communication interface 14 to the check-in device 2. Thereafter, the processor 11 returns to the waiting state in ACT 31 to ACT 38. If the command is transmitted to the check-in device 2 by the communication network 200, the command is received by the communication interface 27 in the check-in device 2. According to the command, the processor 21 determines YES in ACT 52 in FIG. 11 and proceeds to ACT 54.

In ACT 54, the processor 21 starts an alarm operation. The alarm operation is, for example, display on the touch panel 24 of the screen for warning the shopper that the shopper cannot enter the store because the reading of the member card is not completed. The alarm operation is, for example, an output by the sound unit 26 of a voice message for warning the shopper that the shopper cannot enter the store because the reading of the member card is not completed. The alarm operation is, for example, an output by the sound unit 26 of warning sound for informing an abnormality. The alarm operation may be, for example, lighting or flashing of a separately provided warning lamp. The alarm operation may be, for example, notification to an information terminal used by an employee of the store such as a store clerk or a watchman. The processor 21 may execute a plurality of different alarm operations in parallel or sequentially.

In ACT 55, the processor 21 confirms whether the member ID is read by the reader 25. If failing to confirm that the member ID is read, the processor 21 determines NO and proceeds to ACT 56. In ACT 56, the processor 21 confirms whether release operation is performed. If failing in confirming that the release operation is performed, the processor 21 determines NO and returns to ACT 55. In this way, in ACT 55 and ACT 56, the processor 21 waits for the member ID to be read or the release operation to be performed.

If the shopper causes, in response to the alarm operation, the reader 25 of the check-in device 2 to read the member ID recorded in the member card, the processor 21 determines YES in ACT 55 and proceeds to ACT 57. In ACT 57, the processor 21 stops the alarm operation. In ACT 58, the processor 21 notifies the shopper ID as in ACT 53. Thereafter, the processor 21 returns to the waiting state in ACT 51 and ACT 52.

For example, if the shopper cannot cause the reader 25 of the check-in device 2 to read the member ID recorded in the member card, the employee in the store urges the shopper to leave the store. The employee performs predetermined release operation on the touch panel 24. If the release operation is performed in this way, the processor 21 determines YES in ACT 56 and proceeds to ACT 59. In ACT 59, the processor 21 stops the alarm operation. Thereafter, the processor 21 returns to the waiting state in ACT 51 and ACT 52.

In the sales management device 1, if confirming in ACT 42 in FIG. 10 that the shopper ID correlated with the target person ID is present, the processor 11 determines YES and directly returns to the waiting state in ACT 31 to ACT 38 passing the ACT 43. Consequently, the shopper correctly finishing the reading of the member ID is permitted to enter the selling floor. The shopper entering the selling floor looks around for commodities displayed in the selling floor and takes out, from the display shelf or the like, a commodity that the shopper purchases. The shopper returns, to the display shelf or the like, a commodity that the shopper takes out from the display shelf or the like once but cancels.

In the action monitoring device 4, if finishing the notification in ACT 18 in FIG. 9, the processor 41 proceeds to ACT 19. In ACT 19, the processor 41 confirms whether an action of the target person taking out a commodity is successfully confirmed. If failing in confirming the action, the processor 41 determines NO and proceeds to ACT 20. In ACT 20, the processor 41 confirms whether an action of the target person returning a commodity is successfully confirmed. If failing in confirming the action, the processor 41 determines NO and proceeds to ACT 21. In ACT 21, the processor 41 confirms whether the target person is lost track of. If succeeding in monitoring the target person, the processor 41 determines NO and proceeds to ACT 22. In ACT 22, the processor 41 confirms whether the target person leaves the store. If failing in confirming store leaving, the processor 41 determines NO and returns to ACT 19. In this way, in ACT 19 to ACT 22, the processor 41 waits for take-out of a commodity, return of a commodity, loss, or store leaving.

If confirming the action of the target person taking out a commodity, the processor 41 determines YES in ACT 19 and proceeds to ACT 23. In ACT 23, the processor 41 notifies the take-out to the sales management device 1. The processor 41 includes, in notification data for the notification, for example, the target person ID determined in ACT 12. The processor 41 includes, in the notification data, for example, a commodity code for identifying the taken-out commodity and the number of items of the commodity. Thereafter, the processor 41 returns to the waiting state in ACT 19 to ACT 22.

If confirming the action of the target person returning the commodity, the processor 41 determines YES in ACT 20 and proceeds to ACT 24. In ACT 24, the processor 41 notifies the return to the sales management device 1. The processor 41 includes, in notification data for the notification, for example, the target person ID determined in ACT 12. The processor 41 includes, in the notification data, for example, a commodity code for identifying the returned commodity and the number of items of the commodity. Thereafter, the processor 41 returns to the waiting state in ACT 19 to ACT 22.

In the sales management device 1, if the take-out is notified as explained above, the processor 11 determines YES in ACT 35 in FIG. 10 and proceeds to ACT 44. In ACT 44, the processor 11 updates the purchased commodity database DB3 in order to add a purchased commodity based on the notification. That is, if the data record DR3, in which the target person ID included in the notification data of the take-out is set in the field F31, is not included in the purchased commodity database DB3, the processor 11 adds a new data record DR3 to the purchased commodity database DB3. The processor 11 sets, in the field F31 of the data record DR3 to be added, the target person ID included in the notification data. The processor 11 sets, in the field F32 of the data record DR3 to be added, commodity data including the commodity code and the number of items included in the notification data of the take-out and including a cancellation flag for a state indicating that the purchased commodity is not cancelled. On the other hand, if the data record DR3, in which the target person ID included in the notification data of the take-out is set in the field F31, is already included in the purchased commodity database DB3, the processor 11 adds new commodity data to the data record DR3. That is, the processor 11 adds, behind a field in which the commodity data is already set, a field in which the new commodity data is set. The processor 11 includes, in the new commodity data, the commodity code and the number of items included in the notification data of the take-out and the cancellation flag for the state indicating that the purchased commodity is not cancelled. Thereafter, the processor 11 returns to the waiting state in ACT 31 to ACT 38.

In the sales management device 1, if the return is notified as explained above, the processor 11 determines YES in ACT 36 and proceeds to ACT 45. In ACT 45, the processor 11 updates the purchased commodity database DB3 in order to delete the purchased commodity based on the notification. That is, the processor 11 finds out, from the purchased commodity database DB3, the data record DR3 in which the target person ID included in the notification data of the return is set in the field F31. The processor 11 finds out, from the relevant data record DR3, commodity data including the commodity code included in the notification data of the return and rewrites the number of items included in the commodity data to a number obtained by subtracting the number of items included in the commodity data of the return from the number of items included in the commodity data. If the number of items after the rewriting is "0", the processor 11 changes the cancellation flag to a state indicating that the purchased commodity is cancelled. Thereafter, the processor 11 returns to the waiting state in ACT 31 to ACT 38.

A situation could occur in which the shopper set as the target person of the action monitoring processing cannot be detected by the sensor group 3 because of some reason. In such a case, in the action monitoring device 4, the processor 41 loses track of the target person not yet leaving the store. The processor 41 determines YES in ACT 21 in FIG. 9 and proceeds to ACT 25. At this time, the processor 41 detects a failure in tracking. The processor 41 executes the information processing based on the action monitoring application AP4 in this way, whereby the computer including the processor 41 as the central part functions as a detecting unit. In ACT 25, the processor 41 notifies the loss to the sales management device 1. The processor 41 includes, in notification data for the notification, for example, the target person ID determined in ACT 12. The processor 41 may include, in the notification data, data representing date and time of the loss. Thereafter, the processor 41 ends the action monitoring processing.

In the sales management device 1, if the loss is notified in this way, the processor 11 determines YES in ACT 37 in FIG. 10 and proceeds to ACT 46. In ACT 46, the processor 11 updates the shopper database DB2 to indicate that the target person is lost track of. That is, the processor 11 finds out, from the shopper database DB2, the data record DR2 in which the target person ID included in the notification data is set in the field F21 and sets data representing the present date and time in the field F24 of the data record DR2. If data representing date and time when the target person is lost track of is included in the notification data, the processor 11 may set the data in the field F24. Thereafter, the processor 11 ends the sales management processing.

In a situation in which the shopper continuously present in the store cannot be monitored in this way, the processor 41 ends both of the action monitoring processing and the sales management processing executed with the shopper as the target person. However, since the shopper is present in the store, the shopper is detected by the sensor group 3 because of a situation change such as movement. In this case, since the action monitoring processing with the shopper set as the target person already ended, as new action monitoring processing concerning a new target person, the processor 41 determines new detection in ACT 11 in FIG. 9. Consequently, a target person ID different from the target person ID before the loss is determined for the shopper. Action monitoring for the shopper as a target person different from the target person before the loss is performed.

In this case, since the shopper already finished check-in and is present in the selling floor, the shopper does not cause the check-in device 2 to read the member card. In the sales management device 1, the processor 11 does not execute ACT 40 in FIG. 10. In this way, the invalid data remains set in the field F22 in the data record DR2 in which the target person ID determined anew is set in the field F21. The target person is detected anew in the selling floor and not in the authentication area. Accordingly, in the action monitoring device 4, the processor 41 determines NO in ACT 14 in FIG. 9 and directly shifts to the waiting state in ACT 19 to ACT 22. That is, the processor 41 does not execute ACT 18. Therefore, even if a shopper ID is not acquired yet, in the sales management device 1, the processor 1 does not perform ACT 42 and ACT 43 in FIG. 10.

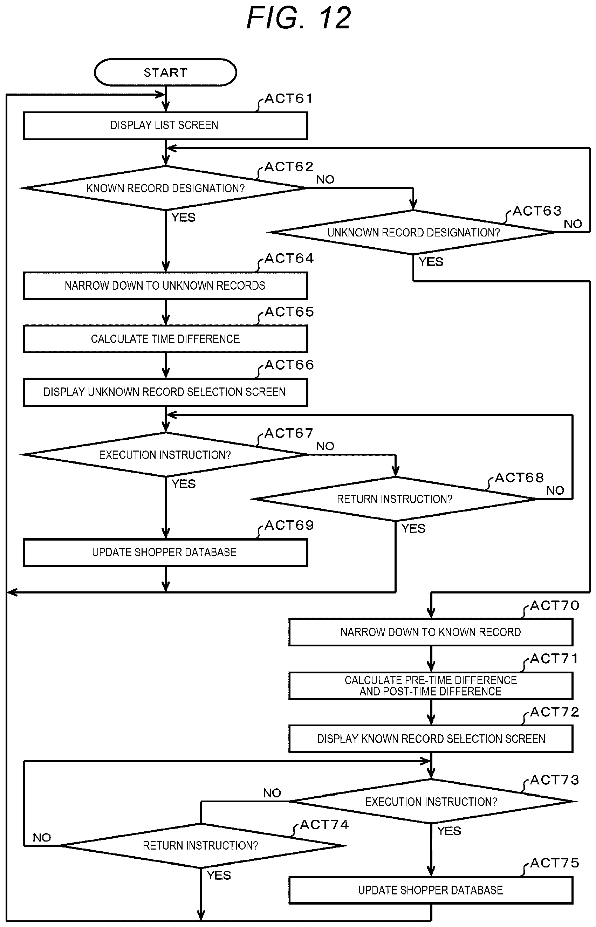

Even if the target person ID different from the target person ID during the check-in is correlated halfway in the shopping as explained above, the shopper can continue the shopping. However, actions of the shopper in that case are monitored as actions of a new target person. Purchased commodities by one shopper are managed by a plurality of data records DR3 in the purchased commodity database DB3. Accordingly, the monitoring person correlates a shopper ID with a target person ID not correlated with the shopper ID using the monitoring person terminal 5. Since the correlation is performed in the monitoring person terminal 5, in the sales management device 1, the processor 11 executes, separately from the sales management processing, shopper management processing based on the shopper management application AP2. FIG. 12 is a flowchart of the shopper management processing by the processor 11.

In ACT 61, the processor 11 instructs the monitoring person terminal 5 to display a list screen. The list screen is a screen showing a list of the data records DR2 included in the shopper database DB2. For example, the processor 11 creates the list screen based on the shopper database DB2. The processor 11 sends Web page data representing the created list screen to the communication network 200 to transmit the Web page data from the communication interface 14 to the monitoring person terminal 5. The Web page data is transmitted to the monitoring person terminal 5 by the communication network 200. Various display instructions from the sales management device 1 to the monitoring person terminal 5 explained below are realized in the same manner as explained above.

In the monitoring person terminal 5, if the Web page data transmitted by the communication network 200 as explained above is received by the communication interface 56, the processor 51 causes the touch panel 54 to display the list screen based on the Web page data. The processor 51 executes this processing and processing explained below with a well-known browsing function based on the browser application AP5.

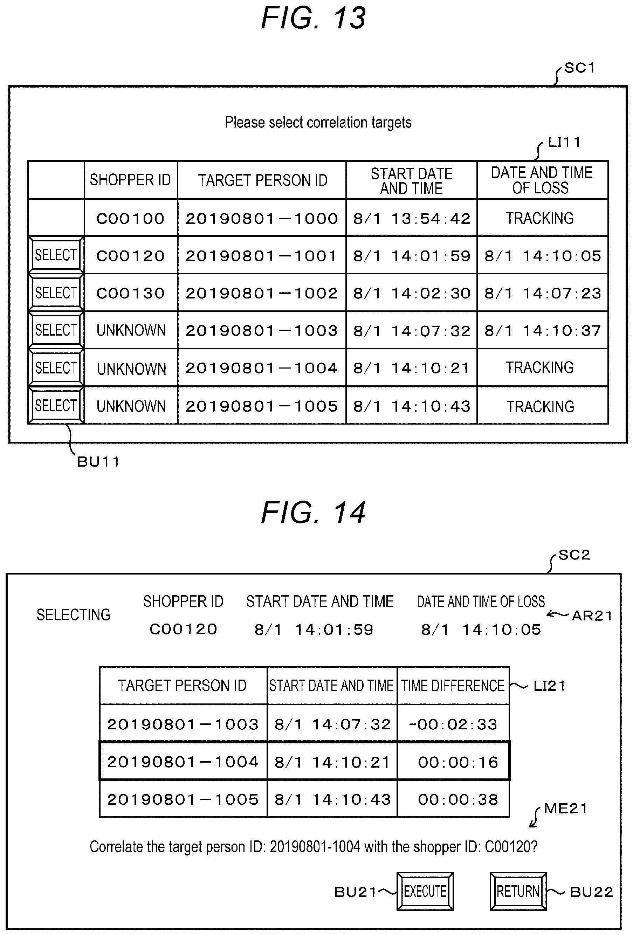

FIG. 13 is a diagram illustrating an example of a list screen SC1. The list screen SC1 illustrated in FIG. 13 is an example in which six data records DR2 with target person IDs "20190801-1000" to "20190801-10005" are included in the shopper database DB2.

The list screen SC1 shows a table LI11. In the table LI11, data set in the field F22, the field F21, the field F23, and the field F24 of one data record DR2 are shown in the order described here in one row of the table LI11. That is, one row of the table LI11 shows a shopper ID, a target person ID, start date and time, and date and time of loss. If the field F22 is invalid data, this is represented as "unknown". If the field F24 is invalid data, this is represented as "tracking". In the table LI11, buttons BU11 are shown at the heads of rows concerning the data records DR2 in which the field F22 is invalid data or the field F24 is not invalid data.

The monitoring person can confirm, based on the list screen SC1 in the state illustrated in FIG. 13, concerning shoppers having shopper IDs "C00120" and "C00130", monitoring for the shoppers as target persons having target person IDs "20190801-1001" and "20190801-1002" is lost. In the following explanation, a records in which a target person is lost track of but a shopper ID is known in this way is referred to as "known record". In this way, the list screen SC 1 is an example of a screen for informing a shopper, a failure in tracking of whom is detected. That is, by instructing the monitoring person terminal 5 to display the list screen, the processor 11 informs the shopper, the failure in tracking of whom is detected. The processor 11 executes the information processing based on the shopper management application AP2 in this way, whereby the computer including the processor 11 as the central part functions as an informing unit.

The monitoring person can confirm, based on the list screen SC 1, that a shopper ID of a target parson having a target person ID "20190801-1003" is unknown and monitoring for the target person is lost. The monitoring person can confirm, based on the list screen SC1, that customer IDs of target persons having target person IDs "20190801-1004" and "20190801-1005" are unknown and monitoring for the target persons is continued. In the following explanation, a record concerning a target person, a shopper ID of whom is in an unknown state, is referred to as "unknown record".

The monitoring person designates any one of known records or unknown records with predetermined operation for, for example, touching the button BU11 shown at the head of the record. According to the designation, the processor 51 notifies data for identifying the record designated by the monitoring person (hereinafter referred to as designated record) to the sales management device 1. As the data for identifying the designated record, the target person ID is used. However, for example, a number for identifying a record in the table LI11 may be used as the data. Various notifications from the monitoring person terminal 5 to the sales management device 1 may be performed by, for example, the well-known processing by the Web browser.

In the sales management device 1, after designating the display of the list screen in ACT 61 in FIG. 12, the processor 11 proceeds to ACT 62. In ACT 62, the processor 11 confirms whether a known record is designated. If failing in confirming the designation, the processor 11 determines NO and proceeds to ACT 63. In ACT 63, the processor 11 confirms whether an unknown record is designated. If failing in confirming the designation, the processor 11 determines NO and returns to ACT 62. In this way, in ACT 62 and ACT 63, the processor 11 waits for a known record or an unknown record to be designated. If the target person ID concerning the designated record is notified from the monitoring person terminal 5 and the data record DR2 concerning the target person ID is equivalent to the known record, the processor 11 determines YES in ACT 62 and proceeds to ACT 64.

If the designated record is equivalent to the known record, a shopper ID set in the field F22 of the data record DR2 equivalent to the designated record is equivalent to specifying data for specifying a shopper doing shopping. The processor 11 determines YES in ACT 62 to thereby input the shopper ID concerning the designated record according to operation by the operator. In this way, the processor 11 executes the information processing based on the shopper management application AP2, whereby the computer including the processor 11 as the central part functions as an input unit.

In ACT 64, the processor 11 narrows down the data records DR2 included into shopper database DB2 to the data records DR2 equivalent to the unknown records. Target person IDs set in the field F21 of the data records DR2 equivalent to the unknown records are equivalent to identification data not correlated with the shopper ID, which the specifying data for specifying the shopper. That is, processing for narrowing down the data records DR2 to the data records DR2 equivalent to the unknown records is an example of processing for determining that target persons ID set in the field F21 of the narrowed-down data records DR2 are not correlated with the shopper ID. The processor 11 executes the information processing based on the shopper management application AP2 in this way, whereby the computer including the processor 11 as the central part functions as a determining unit.

In ACT 65, the processor 11 calculates a time difference concerning each of the unknown records. If a target person of the unknown record is the same shopper as the target person of the designated record, the time difference is a time difference between timing when the shopper is lost track of as the target person of the designated record and timing when the shopper is detected as the target person of the unknown record. For example, the processor 11 subtracts date and time of loss set in the field F24 of the designated record from start date and time set in the field F23 of the unknown record to thereby calculate a time difference concerning the unknown record. If the shopper, who is the target person of the unknown record, is different from the shopper, who is the target person of the designated record, the start date and time of the unknown record is sometimes timing before the date and time of loss of the designated record. In this case, the processor 11 calculates the time difference as a minus value.

In ACT 66, the processor 11 instructs the monitoring person terminal 5 to display an unknown record selection screen. The unknown record selection screen is a screen for causing the monitoring person to select one data record DR2 correlated with the designated record among the data records DR2 equivalent to the unknown records. In the monitoring person terminal 5, if Web page data representing the unknown record selection screen is received by the communication interface 56, the processor 51 causes, based on the Web page data, the touch panel 54 to display the unknown record selection screen.

FIG. 14 is a diagram illustrating an example of an unknown record selection screen SC2. The unknown record selection screen SC2 illustrated in FIG. 14 is an example in which a record shown in a second row of the table LI11 is designated on the list screen illustrated in FIG. 13. The unknown record selection screen SC2 shows a display area AR21, a table LI21, a message ME21, and buttons BU21 and BU22.

The display area AR21 represents a shopper ID, start date and time, and date and time of loss of the designated record. The table LI21 shows a list of unknown records. In the table LI21, data set in the field F21 and the field F23 of one unknown record and the time difference calculated as explained above are shown in the order described here in one row of the table LI21. The message ME21 is a character message for causing the monitoring person to confirm content of correlation performed when execution is instructed. The button BU21 is a softkey for the monitoring person to instruct the execution of the correlation. The button BU22 is a softkey for the monitoring person to instruct return of display to the list screen SC1.

The target person ID shown in the table LI21 is equivalent to identification data not correlated with a shopper ID, which is specifying data. That is, the unknown record selection screen SC2 is a screen showing a list of the identification data. The processor 11 instructs the monitoring person terminal 5 to display the screen on the touch panel 54, which is a display device. The processor 11 executes the information processing based on the shopper management application AP2 in this way, whereby the computer including the processor 11 as the central part functions as a display unit.

An unknown record is generated if a certain shopper is lost track of and thereafter the shopper is detected again. That is, start date and time set in the unknown record is later than date and time of loss set in another data record DR2 in which the shopper is set as a target person. A time difference between the date and time of loss and the start date and time is plus. If the sensor group 3 is appropriately provided, a time from when a certain shopper is lost track of until when the shopper is detected again is not so long in most cases. The time difference shown in the table LI21 in this way is an example of reference data for the operator to determine a shopper ID, which is specifying data that should be correlated with the target person ID, which is the identification data. Showing the time difference, which is an example of the reference data, in the table LI21 means presenting the reference data to the operator. The processor 11 executes the information processing based on the shopper management application AP2 in this way, whereby the computer including the processor 11 as the central part functions as a presenting unit.

The monitoring person determines an unknown record that should be correlated with the designated record referring to the date and time of loss concerning the designate record, the start date and time of each unknown record, and the time difference between the date and time of loss and the start date and time. With predetermined operation for, for example, touching a row concerning the determined unknown record among the rows of the table LI21, the monitoring person selects the unknown record and then instructs the execution of the correlation with predetermined operation such as a touch on the button BU21. FIG. 14 illustrates a state in which an unknown record with a target person ID "20190801-1004" is selected. According to the instruction, the processor 51 notifies, involving a notification of the selected unknown record, the sales management device 1 that an execution instruction is performed. If cancelling the correlation of the unknown record with the designated record, the monitoring person instructs return with predetermined operation such as a touch on the button BU22. According to the instruction, the processor 51 notifies the sales management device 1 that the return instruction is performed.

In the sales management device 1, after instructing the display of the unknown record selection screen in ACT 66 in FIG. 12, the processor 11 proceeds to ACT 67. In ACT 67, the processor 11 confirms whether execution is instructed. If failing in confirming the instruction, the processor 11 determines NO and proceeds to ACT 68. In ACT 68, the processor 11 confirms whether return is instructed. If failing in confirming the instruction, the processor 11 determines NO and returns to ACT 67. In this way, in ACT 67 and ACT 68, the processor 11 waits for execution or return to be instructed. If it is notified from the monitoring person terminal 5 that execution is instructed, the processor 11 determines YES in ACT 67 and proceeds to ACT 69.

In ACT 69, the processor 11 updates the shopper database DB2 in order to correlate the designated record and the selected unknown record. For example, the processor 11 finds out, out of the data records DR2 included in the shopper database DB2, the data record DR2 in which a target person ID of the selected unknown record is set in the field F21. The processor 11 sets a shopper ID of the designated record in the field F22 of the relevant data record DR2. As a result, the processor 11 correlates specifying data input as the shopper ID of the designated record with identification data determined as the target person ID of the selected unknown record. That is, the processor 11 designates, with the operator, an informed plurality of shoppers and correlates commodity information registered concerning the shoppers with the shoppers. The processor 11 executes the information processing based on the shopper management application AP2 in this way, whereby the computer including the processor 11 as the central part functions as a correlating unit.

Thereafter, the processor 11 returns to ACT 61. In this case, in ACT 61, the processor 11 instructs the monitoring person terminal 5 to display the list screen SC1 showing content of the shopper database DB2 updated as explained above.

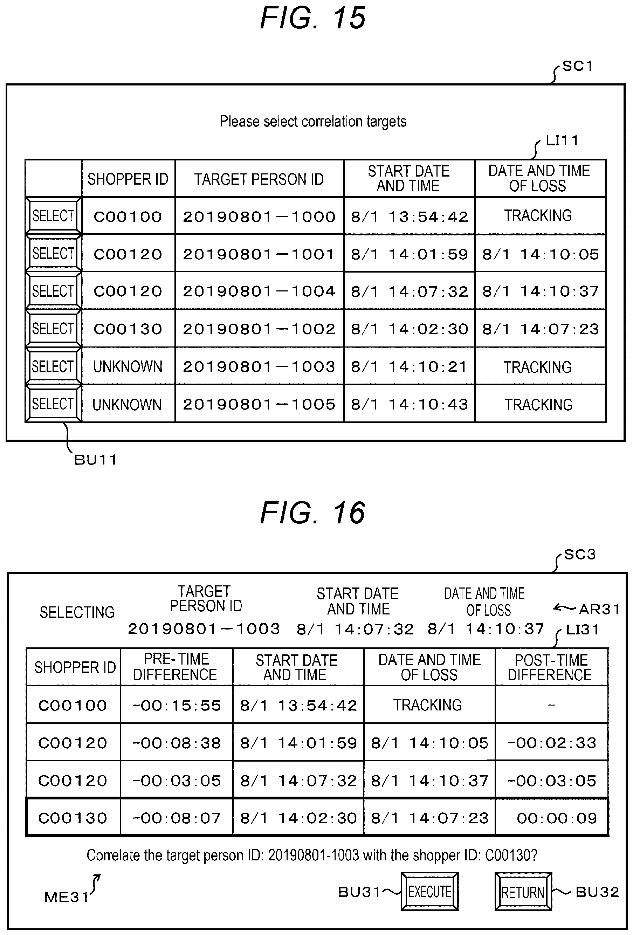

FIG. 15 is a diagram illustrating an example of the list screen SC1. The list screen SC1 illustrated in FIG. 15 is a screen displayed on the touch panel 54 of the monitoring person terminal 5 when the button BU21 is touched on the unknown record selection screen SC2 in the state illustrated in FIG. 14. Accordingly, the table LI11 illustrated in FIG. 15 is changed from the table LI11 illustrated in FIG. 13 to indicate that the target person with the target person ID "20190801-1004" is a shopper with a shopper ID "C00120".

On the other hand, if it is notified from the monitoring person terminal 5 that return is instructed, the processor 11 determines YES in ACT 68 and returns to ACT 61 without executing ACT 69. In this case, in ACT 61, the processor 11 returns the monitoring person terminal 5 to the state in which the list screen SC1 showing the content of the un-updated shopper database DB2 is displayed.

If the monitoring person designates the unknown record on the list screen SC1, the processor 11 determines YES in ACT 63 and proceeds to ACT 70. If the designated record is equivalent to the unknown record in this way, a target person ID set in the field F21 of the data record DR2 equivalent to the designated record is equivalent to identification data not correlated with the shopper ID, which is the specifying data for specifying the shopper. The processor 11 determines YES in ACT 70 to thereby determine that the target person ID concerning the designated record is the identification data not correlated with the specifying data. The processor 11 executes the information processing based on the shopper management application AP2 in this way, whereby the computer including the processor 11 as the central part functions as a determining unit.

In ACT 70, the processor 11 narrows down the data records DR2 included in the shopper database DB2 into the data records DR2 equivalent to the known records. In ACT 71, the processor 11 calculates a pre-time difference and a post-time difference concerning each of the known records. The pre-time difference is, if a target person of the known record is the same shopper as a target person of the designated record, a time difference between timing when the shopper is lost track of as the target person of the designated record and timing when the shopper is detected as the target person of the known record. For example, the processor 11 subtracts date and time of loss set in the field F24 of the designated record from start date and time set in the field F23 of the known record to thereby calculate the pre-time difference concerning the known record. If a shopper, who is the target person of the known record, is different from a shopper, who is the target person of the designated record, the start date and time of the known record is sometimes timing before the date and time of loss of the designated record. In this case, the processor 11 calculates the pre-time difference as a minus value. The post-time difference is, if the target person of the known record is the same shopper as the target person of the designated record, a time difference between timing when the shopper is lost as the target person of the known record and timing when the shopper is detected as the target person of the designated record. The processor 11 subtracts date and time of loss set in the field F24 of the known record from start date and time set in the field F23 of the designated record to thereby calculate the pre-time difference concerning the known record. If a shopper, who is the target person of the known record, is different from a shopper, who is the target person of the designated record, the start date and time of the designated record is sometimes timing before the date and time of loss of the known record. In this case, the processor 11 calculates the post-time difference as a minus value.

In ACT 72, the processor 11 designates the monitoring person terminal 5 to display a known record selection screen. The known record selection screen is a screen for causing the monitoring person to select one data record DR2 correlated with the designated record among the data records DR2 equivalent to the known records. In the monitoring person terminal 5, if Web page data representing the known record selection screen is received by the communication interface 56, the processor 51 causes, based on the Web page data, the touch panel 54 to display the known record selection screen.

FIG. 16 is a diagram illustrating an example of a known record selection screen SC3. The known record selection screen SC3 illustrated in FIG. 16 is an example in which a record shown in a fourth row of the table LI11 is designated on the list screen illustrated in FIG. 13.

The known record selection screen SC3 shows a display area AR31, a table LI31, a message ME31, and buttons BU31 and BU32. The display area AR31 represents a target person ID, start date and time, and date and time of loss of a designated record. The table LI31 shows a list of known records. In the table LI31, data set in the field F21, a pre-time difference, data set in the field F23, data set in the field F24, and a post-time difference of one known record are shown in the order described here in one row of the table LI31. The message ME31 is a character message for causing the monitoring person to confirm content of correlation performed when execution is instructed. The button BU31 is a softkey for the monitoring person to instruct the execution of the correlation. The button BU32 is a softkey for the monitoring person to instruct return of display to the list screen SC1.

A shopper ID shown in the table LI31 is equivalent to the specifying data for specifying the shopper doing shopping. That is, the known record selection screen SC3 is a screen showing a list of the specified data. The processor 11 instructs the monitoring person terminal 5 to cause the touch panel 54, which is a display device, to display the screen. The processor 11 executes the information processing based on the shopper management application AP2 in this way, whereby the computer including the processor 11 as the central part functions as a display unit.

If the known record is a known record added to the shopper database DB2 in check-in of the shopper, the known data is unrelated to an unknown record in which date and time of loss before start date and time thereof is set. However, if the known record is a known record in which a shopper ID is set by the update of the shopper database DB2 in ACT 69 explained above, it is likely that the same shopper as the target person of the unknown record is a target of the known record. In this case, a plus value is generated as the pre-time difference. As in the case of the unknown record, it is likely that the same shopper as the target person of the unknown record is set as a target of a known record in which valid date and time of loss is set. In this case, a plus value is generated as the post-time difference. If the sensor group 3 is appropriately provided, a time from when a certain shopper is lost track of until when the shopper is detected again is not so long in most cases. The pre-time difference or the post-time difference shown in the table LI31 is an example of reference data for the operator to determine a shopper ID, which is specifying data that should be correlated with a target person ID, which is identification data. Showing the pre-time difference or the post-time difference, which is an example of such reference data, in the table LI31 means presenting the reference data to the operator. The processor 11 executes the information processing based on the shopper management application AP2 in this way, whereby the computer including the processor 11 as the central part functions as a presenting unit.

The monitoring person determines a known record that should be correlated with the designated record referring to the start date and time and the date and time of loss concerning the designated record, the start date and time and the date and time of loss of each known record, and the pre-time difference and the post-time difference. The monitoring person selects a relevant unknown record with predetermined operation for, for example, touching a row concerning the determined known record among the rows in the table LI31 and then instructs execution of correlation with predetermined operation such as a touch on the button BU31. FIG. 16 illustrates a state in which a known record with a shopper ID "C00130" is selected. According to the instruction, the processor 51 notifies, involving a notification of the selected known record, the sales management device 1 that the execution instruction is performed. If cancelling the correlation of the known record with the designated record, the monitoring person instructs return with predetermined operation such as a touch on the button BU32. According to the instruction, the processor 51 notifies the sales management device 1 that the return instruction is performed.

In the sales management device 1, after instructing the display of the known record selection screen in ACT 72 in FIG. 12, the processor 11 proceeds to ACT 73. In ACT 73, the processor 11 confirms whether execution is instructed. If failing in confirming the instruction, the processor 11 determines NO and proceeds to ACT 74. In ACT 74, the processor 11 confirms whether return is instructed. If failing in confirming the instruction, the processor 11 determines NO and returns to ACT 73. In this way, in ACT 73 and ACT 74, the processor 11 waits for execution or return to be instructed. If it is notified from the monitoring person terminal 5 that execution is instructed, the processor 11 determines YES in ACT 73 and proceeds to ACT 75.

In ACT 75, the processor 11 updates the shopper database DB2 in order to correlate the designated record and the selected known record. For example, the processor 11 sets a shopper ID of the selected known record in the field F22 of the designated record. The shopper ID set in the field F22 of the data record DR2 equivalent to the selected known record is equivalent to the specifying data for specifying the shopper doing shopping. That is, the processor 11 inputs the specifying data according to operation by the operator. The processor 11 correlates the specifying data input as the shopper ID as explained above with the identification data determined as the target person ID concerning the designated record. The processor 11 executes the information processing based on the shopper management application AP2 in this way, whereby the computer including the processor 11 as the central part functions as an input unit and a correlating unit.

Thereafter, the processor 11 returns to ACT 61. In this case, in ACT 61, the processor 11 instructs the monitoring person terminal 5 to display the list screen SC1 showing content of the shopper database DB2 updated as explained above.

On the other hand, if it is notified from the monitoring person terminal 5 that return is instructed, the processor 11 determines YES in ACT 74 and returns to ACT 61 without executing ACT 75. In this case, in ACT 61, the processor 11 returns the monitoring person terminal 5 to a state in which the list screen SC1 showing content of the shopper database DB2 not updated.

If finishing taking out all commodities that the shopper desires to purchase, the shopper leaves the store taking the commodities. In the action monitoring device 4, if confirming the store leaving of the target person, the processor 41 determines YES in ACT 22 in FIG. 9 and proceeds to ACT 26. In ACT 26, the processor 41 notifies the store leaving to the sales management device 1. The processor 41 includes, in notification data for the notification, for example, the target person ID determined in ACT 12. Thereafter, the processor 41 ends the action monitoring processing.

In the sales management device 1, if the store leaving is notified as explained above, the processor 11 determines YES in ACT 38 in FIG. 10 and proceeds to ACT 47. In ACT 47, the processor 11 performs store leaving processing. First, the processor 11 settles a price for the commodities that the shopper leaving the store takes away, that is, purchased commodities. For example, the processor 11 finds out, out of the data records DR2 included in the shopper database DB2, the data record DR2 in which the target person ID included in the notification data of the store leaving is set in the field F21. The processor 11 determines a shopper ID set in the field F22 of the relevant data record DR2. The processor 11 finds out, out of the data records DR2 included in the shopper database DB2, all data records DR2 in which the relevant shopper ID is set in the field F22. The processor 11 finds out, from the purchased commodity database DB3, all data records DR3 in which any one of target person IDs set in the field F21 of the relevant all data records DR2 is set in the field F31. The processor 11 determines, as purchased commodities, commodities represented by all commodity data included in the relevant all data records DR3 and calculates a price for the purchased commodities. The processor 11 finds out, from the member database DB1, the data record DR1 in which a member ID used as the determined shopper ID is set in the field F11. The processor 11 performs processing for settling the calculated price using payment information set in the field F13 of the relevant data record DR1. For example, the processor 11 requests, using a credit number serving as the payment information, a not-illustrated settlement server to settle an amount of the calculated price. If the settlement is completed, the processor 11 deletes, from the shopper database DB2, all the data records DR2 found out from the shopper database DB2 as explained above. The processor 11 deletes, from the purchased commodity database DB3, all the data records DR3 found out from the purchased commodity database DB3 as explained above. The processor 11 may perform, as one kind of processing of the store leaving processing, processing for transmitting transaction data and journal data to a not-illustrated POS server or the like. The processor 11 may perform, as one kind of processing of the store leaving processing, processing for transmitting electronic receipt data to an electronic receipt server or the like. Thereafter, the processor 11 returns to the waiting state in ACT 31 to ACT 38. An accounting device not illustrated in FIG. 1 may be provided. The accounting device may perform both of the processing of calculation of a price of purchased commodities and the processing of settlement of the price or only the processing of settlement. If use is permitted to nonmembers as well, at least settlement concerning the nonmembers is performed in the accounting machine.

As explained above, with the sales management device 1, even if the shopper is lost track of in the processing for monitoring actions of the shopper and the shopper is monitored as the target person identified by the target person ID not correlated with the shopper ID, the shopper ID is correlated with the target person ID not correlated with the shopper ID according to operation by the monitoring person. The shopper can be appropriately managed.

With the sales management device 1, if the data record DR2 including the shopper ID that should be correlated with the target person ID is designated by the monitoring person first, the sales management device 1 causes the touch panel 54 of the monitoring person terminal 5 to display the unknown record selection screen SC2 showing the list of the target person IDs not correlated with the shopper ID and causes the monitoring person to select the data record DR2 including the target person ID that should be correlated with the shopper ID. Therefore, time and labor of the monitoring person for selecting the data record DR2 including the target person ID that should be correlated with the shopper ID are reduced.

With the sales management device 1, if the data record DR2 including the target person ID that should be correlated with the shopper ID is designated by the monitoring person first, the sales management device 1 causes the touch panel 54 of the monitoring person terminal 5 to display the known record selection screen SC3 showing the list of the shopper IDs and causes the monitoring person to select the data record DR2 including the shopper ID that should be correlated with the target person ID. Therefore, labor and time of the monitoring person for selecting the data record DR2 including the shopper ID that should be correlated with the target person ID are reduced.

With the sales management device 1, since the time difference, the pre-time difference, and the post-time difference are presented to the monitoring person, the monitoring person can easily determine, referring to the time difference, the pre-time difference, and the post-time difference, a combination of the data records DR2 respectively including the shopper ID and the target person ID that should be correlated with each other.

Various modified implementations explained below of this embodiment are possible. The processor 11 may execute the action monitoring processing in the sales management device 1.

The processor 11 may automatically determine, according to predetermined conditions, the target person ID correlated with the shopper ID. For example, if a target person identified by a target person ID not correlated with the shopper ID passes a predetermined check point that the target person passes when moving to the exit, the processor 11 may determine the target person ID as the target person ID that should be correlated with the shopper ID. In this case, the processor 11 more desirably further causes the touch panel 54 of the monitoring person terminal 5 to display a screen for urging the monitoring person to select a shopper ID correlated with the determined target person ID.

A method of managing the correlation between the shopper ID and the target person ID can be optionally changed to, for example, include the shopper ID in the data record DR3 of the purchased commodity database DB3.

In this embodiment, the input is performed by touching the button BU11 displayed on the list screen SC1. However, the input is not limited to this. For example, the input may be performed by inputting the displayed target person ID with numeric keys. The input may be performed by, for example, encoding the target person ID or the shopper ID and displaying the target person ID or the shopper ID on the screen and reading the target person ID or the shopper ID with a scanner.

In the monitoring person terminal 5, the processor 51 may execute processing based on a dedicated application program for executing the user interface operation explained in the embodiment. In this case, the processor 51 may generate, under an instruction from the processor 11 of the sales management device 1, at least one of the list screen SC 1, the unknown record selection screen SC2, and the known record selection screen SC3.

The processor 51 may execute the shopper management processing in the monitoring person terminal 5. In this case, the monitoring person terminal 5 has a function of a shopper monitoring device. As the reference data, data other than the time difference, the pre-time difference, and the post-time difference may be used. For example, position data concerning a position where the target person is detected first and a position detected immediately before the target person is lost track of may be used as the reference data. For example, an image showing a moving track of the target person in a sketch of the selling floor may be used as the reference data. For example, an image in which graphs showing periods of monitoring of a respective plurality of target persons are arranged side by side to enable comparison of the graphs may be used as the reference data. For example, an image obtained by photographing the target person with a camera included in the sensor group 3 may be used as the reference data. The reference data may be presented if the monitoring person performs predetermined operation for requesting the presentation of the reference data.

The presentation of the reference data is not limited to the screen display on the touch panel 54 and may be performed by any method such as output of voice message or printing.

If the member ID is read in the check-in device 2, authentication processing for confirming validity of the member ID may be performed to correlate only a valid member ID with the target person ID. An existing technique can be used for the authentication processing.

A part or all of the functions realized by the processors 11, 21, 41, and 51 with the information processing can also be realized by hardware that executes information processing not based on a program such as a logic circuit. Each of the functions can also be realized by combining software control with the hardware such as the logic circuit.

## Claims

1. A shopper management system (100) comprising:
an action monitoring device (4) ;
a sales management device (1) configured to perform, based on a monitoring result by the action monitoring device (4), sales management processing, which is information processing relating to purchase of commodities by a shopper in a store;
a check-in device (2) configured to read a member identifier recorded in a member card for a shopper entering the store and transmit the read member identifier to the sales management device;
a monitoring person terminal (5), and
a sensor group (3) configured to detect an action of a shopper in the store;
the action monitoring device (4) being configured to :
monitor outputs of the sensor group (3) and detect a target person to be tracked in the store based on the outputs of the sensor group (3), wherein when a state in which the target person is not detected by the sensor group (3) continues for a predetermined period, the action monitoring device (4) loses track of the target person, and when detecting the target person after losing track of the target person, the action monitoring device (4) is configured to detect the target person as a new target person,
determine a target identifier for each tracked target person, and
transmit, when the target person is detected, notification data including a notification code representing a notification of new detection of a target person, the determined target identifier and data representing date and time when the target person is detected, and transmit,
when the target person is lost track of, notification data including the determined target person identifier and data representing date and time when the target person is lost track of to the sales management device (1) ; and
wherein the sales management device (1) comprises a processing circuit (11) configured to:
store a first list of target identifiers for identifying a plurality of tracked target persons within the store;
store a second list of shopper identifiers, being correlated with member identifiers, for specifying a plurality of shoppers within the store;
determine whether or not a respective target identifier from the first list of target identifiers for identifying a respective tracked target person is correlated with a respective shopper identifier from the second list of shopper
identifiers for specifying a respective shopper; provide a display to an operator of the monitoring person terminal (5) presenting reference data based on outputs of the sensor group, including a first subset of the first list of target identifiers that are detected as a new target person after losing track of a target person and that are not correlated with any of the shopper identifiers, the target identifiers of the first subset being presented with their respective start date and time of detection, and a second subset of target identifiers that are correlated with a shopper identifier and that are lost track of the target identifiers in the second subset being presented with their respective date and time of loss of track,
receive the input that newly links a target identifier in the first subset to a shopper identifier correlated with a respective target identifier from the second subset according to an operation performed by the operator; and correlate the shopper identifier with the target identifier in the first subset.

2. A shopper management method comprising:
detecting, by an action monitoring device (4), persons entering a store based on outputs of a sensor group (3);
setting, by the action monitoring device, a target identifier (ID) for each person that enters the store;
reading, by a check-in device (2), a shopper ID associated with each person that enters the store;
receiving, by a sales management device (1), the target ID and the shopper ID transmitted respectively from the action monitoring device and the check-in device;
correlating, by the sales management device, the target ID for each person with the shopper ID associated with each person;
tracking, by the action monitoring device, each person within the store;
detecting, by the action monitoring device based on the outputs of the sensor group (3), a respective target person within the store that the action monitoring device previously lost track of;
setting, by the action monitoring device, a new target ID for the respective person;
providing, by the sales management device, a display to an operator of a monitoring person terminal (5) presenting reference data based on outputs of the sensor group for the operator to use to determine an input to link the shopper ID associated with the respective target person to the new target ID, the reference data including a new target ID for the respective person after losing track of a person correlated with a target ID and a shopper ID,
receiving, by the processing circuit, the input according to an operation performed by the operator that links the shopper ID associated with the respective target person to the new target ID; and
correlating, by the processing circuit, the new target ID with the shopper ID associated with the respective target person based on the input.

## Patentansprüche

1. Käufer-Managementsystem (100), umfassend:
eine Aktionsüberwachungsvorrichtung (4);
eine Verkaufsmanagementvorrichtung (1), die konfiguriert ist, um basierend auf einem Überwachungsresultats durch die Aktionsüberwachungsvorrichtung (4) eine Verkaufsmanagementverarbeitung durchzuführen, die eine Informationsverarbeitung in Bezug auf einen Kauf von Waren durch einen Käufer in einem Geschäft ist;
eine Check-in-Vorrichtung (2), die konfiguriert ist, um eine Mitgliedskennung, die in einer Mitgliedskarte aufgezeichnet ist, für einen Käufer, der das Geschäft betritt, zu lesen und die gelesene Mitgliedskennung an die Verkaufsmanagementvorrichtung zu übertragen;
ein Überwachungsperson-Terminal (5), und
eine Sensorgruppe (3), die konfiguriert ist, um eine Aktion eines Käufers in dem Geschäft zu erfassen; wobei die Aktionsüberwachungsvorrichtung (4) zu Folgendem konfiguriert ist:
Überwachen von Ausgängen der Sensorgruppe (3) und Erfassen einer zu verfolgenden Zielperson in dem Geschäft basierend auf den Ausgängen der Sensorgruppe (3), wobei, wenn ein Zustand, in dem die Zielperson von der Sensorgruppe (3) nicht erfasst wird, über eine vorbestimmte Zeitdauer andauert, die Aktionsüberwachungsvorrichtung (4) die Spur der Zielperson verliert und, wenn die Zielperson erfasst wird, nachdem die Spur der Zielperson verloren wurde, die Aktionsüberwachungsvorrichtung (4) konfiguriert ist, um die Zielperson als eine neue Zielperson zu erfassen,
Bestimmen einer Zielkennung für jede verfolgte Zielperson, und
Übertragen, wenn die Zielperson erfasst wird, von Benachrichtigungsdaten, die einen Benachrichtigungscode beinhalten, der eine Benachrichtigung einer erneuten Erfassung einer Zielperson darstellt,
wobei die bestimmte Zielkennung und Daten, die Datum und Uhrzeit darstellen, zu der die Zielperson erfasst wird, und
Übertragen, wenn die Spur der Zielperson verloren wurde, von Benachrichtigungsdaten, die die bestimmte Zielpersonenkennung und Daten beinhalten, die Datum und Uhrzeit darstellen, zu der die Spur der Zielperson verloren wurde, an die Verkaufsmanagementvorrichtung (1); und
wobei die Verkaufsmanagementvorrichtung (1) eine Verarbeitungsschaltung (11) umfasst, die zu Folgendem konfiguriert ist:
Speichern einer ersten Liste von Zielkennungen zum Identifizieren einer Vielzahl von verfolgten Zielpersonen innerhalb des Geschäfts;
Speichern einer zweiten Liste von Käuferkennungen, die mit Mitgliederkennungen korreliert sind, um eine Vielzahl von Käufern innerhalb des Geschäfts zu spezifizieren;
Bestimmen, ob eine jeweilige Zielkennung aus der ersten Liste von Zielkennungen zum Identifizieren einer jeweiligen verfolgten Zielperson mit einer jeweiligen Käuferkennung aus der zweiten Liste von Käuferkennungen korreliert ist, um einen jeweiligen Käufer zu spezifizieren;
Bereitstellen einer Anzeige für einen Bediener des Überwachungsperson-Terminals (5), die Referenzdaten basierend auf Ausgängen der Sensorgruppe darstellt, einschließlich eines ersten Teilsatzes der ersten Liste von Zielkennungen, die als neue Zielperson erfasst werden, nachdem die Spur einer Zielperson verloren wurde, und die nicht mit einer der Käuferkennungen korreliert sind, wobei die Zielkennungen des ersten Teilsatzes mit ihrem jeweiligen Startdatum und ihrer jeweiligen Erfassungszeit dargestellt werden, und ein zweiter Teilsatz von Zielkennungen, die mit einer Käuferkennung korreliert sind und die Spur der Zielkennungen in dem zweiten Teilsatz verloren haben, mit ihrem jeweiligen Datum und ihrer jeweiligen Zeit des Verlusts der Spur dargestellt werden,
Empfangen des Eingangs, der eine Zielkennung in dem ersten Teilsatz neu mit einem Käuferkennung verknüpft, der mit einer entsprechenden Zielkennung aus dem zweiten Teilsatz gemäß einem von dem Bediener durchgeführten Vorgang korreliert; und
Korrelieren der Käuferkennung mit der Zielkennung in dem ersten Teilsatz.

2. Käufer-Managementverfahren, umfassend:
Erfassen, durch eine Aktionsüberwachungsvorrichtung (4), von Personen, die ein Geschäft betreten, basierend auf Ausgängen einer Sensorgruppe (3);
Festlegen, durch die Aktionsüberwachungsvorrichtung, einer Zielkennung (ID) für jede Person, die das Geschäft betritt;
Lesen, durch eine Check-in-Vorrichtung (2) einer Käufer-ID, die mit jeder Person assoziiert ist, die das Geschäft betritt;
Empfangen, durch eine Verkaufsmanagementvorrichtung (1), der Ziel-ID und der Käufer-ID, die jeweils von der Aktionsüberwachungsvorrichtung und der Check-in-Vorrichtung übertragen werden;
Korrelieren, durch die Verkaufsmanagementvorrichtung, der Ziel-ID für jede Person mit der Käufer-ID, die mit jeder Person assoziiert ist;
Verfolgen, durch die Aktionsüberwachungsvorrichtung, jeder Person innerhalb des Ladens;
Erfassen, durch die Aktionsüberwachungsvorrichtung basierend auf den Ausgängen der Sensorgruppe (3), einer jeweiligen Zielperson innerhalb des Ladens, deren Spur die Aktionsüberwachungsvorrichtung zuvor verloren hat;
Festlegen, durch die Aktionsüberwachungsvorrichtung, einer neuen Ziel-ID für die jeweilige Person;
Bereitstellen, durch die Verkaufsmanagementvorrichtung, einer Anzeige für einen Bediener eines Überwachungsperson-Terminals (5), die Referenzdaten basierend auf Ausgängen der Sensorgruppe für den Bediener darstellt, um einen Eingang zu bestimmen, um die mit der jeweiligen Zielperson assoziierte Käufer-ID mit der neuen Ziel-ID zu verknüpfen, wobei die Referenzdaten eine neue Ziel-ID für die jeweilige Person beinhalten, nachdem sie die Spur einer mit einer Ziel-ID und einer Käufer-ID korrelierten Person verloren hat;
Empfangen, durch die Verarbeitungsschaltung, des Eingangs gemäß einem von dem Bediener durchgeführten Vorgang, der die Käufer-ID, die mit der jeweiligen Zielperson assoziiert ist, mit der neuen Ziel-ID verknüpft; und
Korrelieren, durch die Verarbeitungsschaltung, der neuen Ziel-ID mit der Käufer-ID, die mit der jeweiligen Zielperson assoziiert ist, basierend auf dem Eingang.

## Revendications

1. Système de gestion de client (100) comprenant :
un dispositif de surveillance d'action (4) ;
un dispositif de gestion des ventes (1) configuré pour effectuer, sur la base d'un résultat de surveillance par le dispositif de surveillance d'action (4), un traitement de gestion des ventes, qui est un traitement d'informations relatives à l'achat de produits par un client dans un magasin ;
un dispositif d'enregistrement (2) configuré pour lire un identifiant de membre enregistré dans une carte de membre pour un client entrant dans le magasin et transmettre l'identifiant de membre lu au dispositif de gestion des ventes ;
un terminal personnel de surveillance (5), et
un groupe de capteurs (3) configuré pour détecter une action d'un client dans le magasin ;
le dispositif de surveillance d'action (4) étant configuré pour :
surveiller les sorties du groupe de capteurs (3) et détecter une personne cible à suivre dans le magasin sur la base des sorties du groupe de capteurs (3), dans lequel, lorsqu'un état dans lequel la personne cible n'est pas détectée par le groupe de capteurs (3) persiste pendant une période prédéterminée, le dispositif de surveillance d'action (4) perd la trace de la personne cible, et lors de la détection de la personne cible après avoir perdu la trace de la personne cible, le dispositif de surveillance d'action (4) est configuré pour détecter la personne cible en tant que nouvelle personne cible,
déterminer un identifiant cible pour chaque personne cible suivie, et
transmettre, lorsque la personne cible est détectée, des données de notification comprenant un code de notification représentant une notification de nouvelle détection d'une personne cible, l'identifiant cible déterminé et des données représentant la date et l'heure auxquelles la personne cible est détectée et transmettre, lorsque la personne cible est perdue pour le suivi, des données de notification comprenant l'identifiant de la personne cible déterminé et des données représentant la date et l'heure auxquelles la personne cible est perdue pour le suivi au dispositif de gestion des ventes (1) ; et
dans lequel le dispositif de gestion des ventes (1) comprend un circuit de traitement (11) configuré pour :
stocker une première liste d'identifiants cibles pour identifier une pluralité de personnes cibles suivies dans le magasin ;
stocker une deuxième liste d'identifiants de clients, corrélés à des identifiants de membres, pour spécifier une pluralité de clients dans le magasin ;
déterminer si un identifiant cible respectif de la première liste d'identifiants cibles pour identifier une personne cible suivie respective est corrélé ou non à un identifiant de client respectif de la deuxième liste d'identifiants de client pour spécifier un client respectif ;
fournir un affichage à un opérateur du terminal personnel de surveillance (5) présentant des données de référence basées sur des sorties du groupe de capteurs, comprenant un premier sous-ensemble de la première liste d'identifiants cibles qui sont détectés comme une nouvelle personne cible après avoir perdu la trace d'une personne cible et qui ne sont corrélés à aucun des identifiants de client, les identifiants cibles du premier sous-ensemble étant présentés avec leurs dates et heures de début de détection respectives, et un deuxième sous-ensemble d'identifiants cibles qui sont corrélés à un identifiant de client et qui sont perdus pour le suivi, les identifiants cibles du deuxième sous-ensemble étant présentés avec leur dates et heures respectives de perte pour le suivi,
recevoir l'entrée qui lie nouvellement un identifiant cible dans le premier sous-ensemble à un identifiant de client corrélé à un identifiant cible respectif du deuxième sous-ensemble en fonction d'une opération effectuée par l'opérateur ; et
corréler l'identifiant du client à l'identifiant cible dans le premier sous-ensemble.

2. Procédé de gestion de client comprenant :
la détection, par un dispositif de surveillance d'action (4), de personnes entrant dans un magasin sur la base des sorties d'un groupe de capteurs (3) ;
la définition, par le dispositif de surveillance d'action, d'un identifiant cible (ID) pour chaque personne qui entre dans le magasin ;
la lecture, par un dispositif d'enregistrement (2), d'un identifiant de client associé à chaque personne qui entre dans le magasin ;
la réception, par un dispositif de gestion des ventes (1), de l'identifiant cible et l'identifiant de client transmis respectivement depuis le dispositif de surveillance d'action et le dispositif d'enregistrement ;
la corrélation, par le dispositif de gestion des ventes, de l'identifiant cible de chaque personne à l'identifiant de client associé à chaque personne ;
le suivi, par le dispositif de surveillance d'action, de chaque personne dans le magasin ;
la détection, par le dispositif de surveillance d'action sur la base des sorties du groupe de capteurs (3), d'une personne cible respective dans le magasin dont le dispositif de surveillance d'action avait précédemment perdu la trace ;
la définition, par le dispositif de surveillance d'action, d'un nouvel identifiant cible pour la personne respective ;
la fourniture, par le dispositif de gestion des ventes, d'un affichage à un opérateur d'un terminal personnel de surveillance (5) présentant des données de référence basées sur des sorties du groupe de capteurs pour que l'opérateur les utilise pour déterminer une entrée pour lier l'identifiant de client associé à la personne cible respective au nouvel identifiant cible, les données de référence comprenant un nouvel identifiant cible pour la personne respective après avoir perdu la trace d'une personne corrélée à un identifiant cible et à un identifiant de client ;
la réception, par le circuit de traitement, de l'entrée en fonction d'une opération effectuée par l'opérateur qui relie l'identifiant de client associé à la personne cible respective au nouvel identifiant cible ; et
la corrélation, par le circuit de traitement, du nouvel identifiant cible à l'identifiant de client associé à la personne cible respective sur la base de l'entrée.
